# EUROPÄISCHE PATENTSCHRIFT

(11) **EP 2 598 422 B1**
(45) Veröffentlichungstag und Bekanntmachung des Hinweises auf die Patenterteilung: **07.01.2015**
(21) Anmeldenummer: 11738437.0
(22) Anmeldetag: 27.07.2011
(51) Int. Cl.: B65G 65/48

(54) **DOSIER- UND FÖRDERVORRICHTUNG FÜR FLIEßFÄHIGES SCHÜTTGUT**
DOSING AND CONVEYING APPARATUS FOR FLOWABLE BULK MATERIAL
APPAREIL DE DOSAGE ET DE TRANSPORT POUR DES MATERIAUX FLUIDES EN VRAC

(30) Priorität: 07.06.2011 DE 102011050906; 31.07.2010 DE 102010033022
(43) Veröffentlichungstag der Anmeldung: 05.06.2013
(73) Patentinhaber: Lührs, Friedrich, 49453 Rehden /Lohaus (DE)
(72) Erfinder: Lührs, Friedrich, 49453 Rehden /Lohaus (DE)
(74) Vertreter: Kleine, Hubertus
(86) Internationale Anmeldenummer: PCT/EP2011/062904
(87) Internationale Veröffentlichungsnummer: WO 2012/016897

(56) Entgegenhaltungen:
- EP-B1- 0 451 225
- WO-A1-96/04193
- CH-A5- 659 052
- US-A- 3 193 155
- US-A- 3 828 947

## Beschreibung

Die vorliegende Erfindung bezieht sich auf eine Dosier- und Fördervorrichtung für fließfähiges Schüttgut, welches aus einem Vorratsbehälter austragbar ist.

Die infrage kommende Dosier- und Fördervorrichtung ist für die unterschiedlichsten Schüttgüter geeignet Diese Schüttgüter können die Eigenschaft haben, dass sie relativ schlecht fließfähig sind bzw. solche Schüttgüter werden als schwer fließende Schüttgüter bezeichnet. Insbesondere, wenn das Schüttgut noch einen relativ hohen Restfeuchtegehalt aufweist oder wenn streifen- oder faserförmige Substanzen enthalten sind, wird die Förderung problematisch.

Die in Rede stehenden Schüttgüter werden mittels der Dosier- und Fördervorrichtung entweder zum endgültigen Verbrauch oder zu einer Wiederverwertung dosiert. Dabei ist eine äußerst genaue Dosierung notwendig. Dies gilt insbesondere, wenn das Schüttgut ein Tierfutter ist, welches den Tieren dosiert gegeben wird. Sofern es sich um Abfall, beispielsweise zu verwertende Kunststoffe oder zu verbrennende Kunststoffe handelt, ist auch eine äußerst genaue Dosierung erforderlich.

In der Fördertechnik werden sogenannte Schneckendosierer verwendet, die eine rotierend antreibbare Schnecke aufweisen. Derartige Schneckendosierer sind jedoch nicht für problematisch zu fördernde Schüttgüter geeignet.

Die US 3,193,155 offenbart eine Fördervorrichtung für Futtermittel, bei der unterhalb einer Scheibe zwei Platten in einem Fallrohr fixiert sind. In jeder Platte ist eine Öffnung ausgespart, wobei die Öffnungen in den beiden Platten um 180° versetzt angeordnet sind. Zwischen den Platten sind drehbare Flügel angeordnet.

Der Erfindung liegt die Aufgabe zugrunde, eine Dosier- und Fördervorrichtung für fließfähiges Schüttgut zu schaffen, mit dem auch Schüttgüter mit einem relativ hohen Feuchtegehalt und auch Schüttgüter dosiert werden können, die Feststoffe enthalten. Darüber hinaus soll die Dosier- und Fördervorrichtung konstruktiv einfach, kostengünstig herstellbar sein und eine hohe Funktionssicherheit bieten.

Die gestellte Aufgabe wird durch eine Dosier- und Fördervorrichtung mit den Merkmalen des Anspruches 1 gelöst.

An den Vorratsbehälter ist ein Fallrohr angeschlossen, in das ein einen Durchlaufspalt begrenzendes Schüttkegelbildeelement und ein Austrageelement und zwischen dem Schüttkegelbildeelement und dem Austrageelement ein rotierend antreibbares Dosierelement jeweils im Abstand zueinander angeordnet sind.

Die erfindungsgemäße Dosier- und Fördervorrichtung arbeitet nach dem gravimetrischen Prinzip, d.h., das Schüttgut durchläuft das Fallrohr im freien Fall. Das Dosierelement, das Austrageelement und das Rührwerkzeug liegen mit ihren Achsen fluchtend in der Mittellängsachse des Fallrohres zueinander oder auch gegenüber der Mittellängsachse versetzt. Das Schüttkegelbildeelement ist so ausgelegt, dass ein Schüttkegel gebildet wird. Durch die Rotationsbewegung des Dosierelementes und/oder des Schüttkegelbildeelementes wird das Schüttgut in Richtung zum Austrageelement gefördert und von dort weiterbefördert.

Bei den zuvor genannten Elementen handelt es sich um rotationssymmetrische Bauteile mit dem Vorteil, dass sie einfach herzustellen sind und dass es keine Ecken und Kanten gibt, in denen sich Schüttgut ablagern kann. Das Fallrohr ist üblicherweise ein handelsübliches Rohr mit einem entsprechenden Durchmesser.

Zur Bildung eines Schüttkegels ist vorgesehen, dass das Schüttkegelbildeelement dem Vorratsbehälter zugewandt und dass das Austrageelement dem Vorratsbehälter abgewandt liegt.

Es ist ferner vorgesehen, dass das Schüttkegelbildeelement als Einlaufscheibe ausgebildet ist, und dass der Außendurchmesser der Scheibe zur Bildung des Durchlaufspaltes für das Schüttgut geringer ist als der Innendurchmesser des Fallrohres.

Die Einlaufscheibe ist an der dem Vorratsbehälter zugewandten Seite glattflächig und kann mit Verstärkungselementen versehen sein. Für solche Verstärkungselemente können zusätzliche Profile an der dem Vorratsbehälter abgewandten Seite angesetzt werden, besonders vorteilhaft ist jedoch, wenn die Scheibe am äußeren Rand einen umlaufenden Kragen aufweist, der in Richtung zum Austrageelement gerichtet ist.

Erfindungsgemäß ist vorgesehen, dass das Austrageelement als Austragering mit einer zentrischen Bohrung ausgebildet ist, und dass der Außendurchmesser des Austrageringes dem Innendurchmesser des Fallrohres entspricht oder annähernd entspricht. Das Austrageelement ist in diesem Falle beweglich angeordnet und in bevorzugter Ausführung am Fallrohr festgelegt. In Verbindung mit dem rotierend antreibbaren Dosierelement

Anhand der beiliegenden Zeichnungen wird die Erfindung noch näher erläutert.

Es zeigen:
- Figur 1: einen Ausschnitt der erfindungsgemäßen Dosier- und Fördervorrichtung in perspektivischer Darstellung, das Dosierelement, das Rührwerkzeug, das Austrageelement und die Welle zeigend und
- Figur 2: eine der Figur 1 entsprechende Ansicht, jedoch sind die Bauelemente teilweise aufgeschnitten.

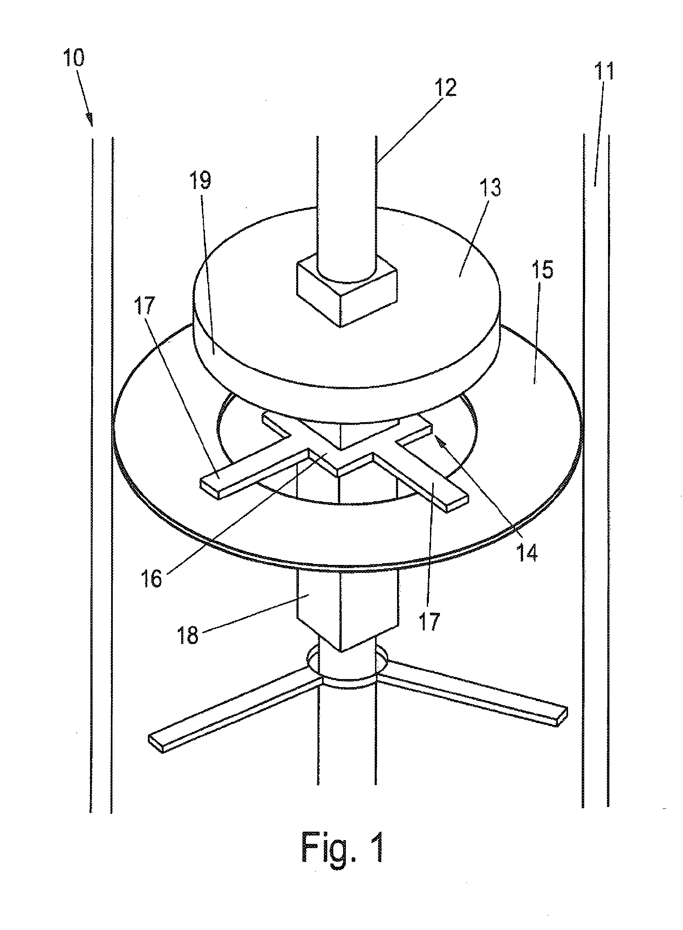

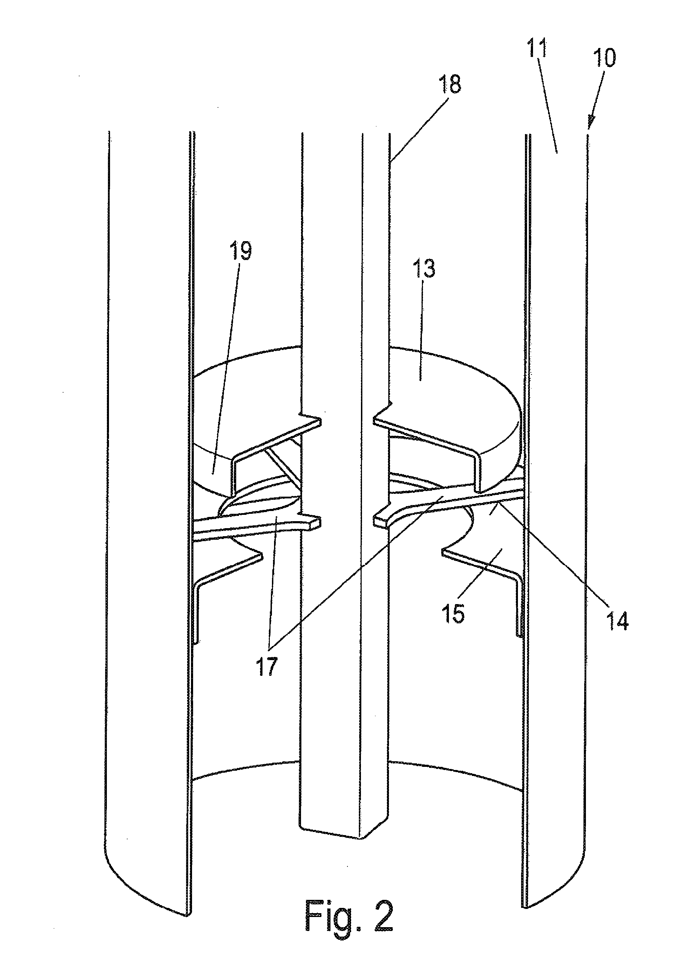

Das in den Figuren 1 und 2 dargestellte Dosier- und Förderelement 10 ist aus Gründen der vereinfachten Darstellung als Ganzes nicht dargestellt. Das Dosier- und Förderelement 10 enthält ein Fallrohr 11, welches an einen nicht dargestellten Vorratsbehälter angeschlossen ist. Dieser Vorratsbehälter ist üblicherweise ein Trichter. Innerhalb des Fallrohres 11 ist in der Mittellängsachse eine rotierend antreibbare Welle 12 angeordnet. Diese Welle 12 trägt ein Schüttkegelbildeelement 13 in Form einer Einlaufscheibe, im Abstand dazu ein Dosierelement 14 und im Abstand zum Dosierelement 14 ein Austrageelement 15, welches ebenfalls scheibenförmig gestaltet ist. Wie die Figuren zeigen, ist der Durchmesser des Schüttkegelbildeelementes 13 geringer als der Innendurchmesser des Fallrohres 11, so dass ein Dosierspalt oder ein Durchlaufspalt für das Schüttgut gebildet wird.

Wie insbesondere die Figur 2 zeigt, ist das Austrageelement 15 als Ring ausgebildet und kontaktiert die Innenfläche des Fallrohres 11 und kann verstellbar sein. Das Dosierelement 14 besteht im dargestellten Ausführungsbeispiel aus einem Tragring 16 und vier Rührflügeln 17, die unter einem Winkel von 90 Grad zueinander stehen.

Im Bereich des Schüttkegelbildeelementes 13, des Dosierelementes 14 und des Austrageelementes 15 ist auf die Welle 12 ein Mehrkantstück 18 aufgesetzt, um das Schüttkegelbildeelement 13 und das Dosierelement 14 drehfest zu verbinden.

Im dargestellten Ausführungsbeispiel wird das Schüttkegelbildeelement 13 und das Dosierelement 14 angetrieben. Im Gegensatz zu dieser Ausführung ist es auch ausreichend, dass ausschließlich das Dosierelement 14 angetrieben wird.

Wie die Figuren ferner zeigen, ist das Austrageelement 15 als Ring ausgebildet mit einer zentrischen Öffnung bzw. Bohrung und das scheibenförmige Schüttkegelbildeelement 13 ist an der dem nicht dargestellten Vorratsbehälter abgewandten Seite mit einem umlaufenden Kragen 19 versehen.

Die Welle 12 wird von einer Antriebseinheit angetrieben. Diese kann einen elektromotorischen Antrieb aufweisen, insbesondere, wenn die Dosier- und Fördervorrichtung im industriellen Bereich eingesetzt wird. Wird sie im landwirtschaftlichen Bereich zur Dosierung von Tierfutter eingesetzt, ist diese Antriebseinheit rein mechanisch ausgelegt, und über eine Antriebswelle bzw. Eingangswelle wird die Welle 12 durch Bewegung der Eingangswelle angetrieben.

Es ergibt sich aus den Figuren, dass das in das Fallrohr 11 einströmende Schüttgut durch das scheibenförmige Schüttkegelbildeelement 13 nach außen läuft, um den Dosierspalt bzw. einen Durchlaufspalt zu durchlaufen. Es ist allgemein bekannt, dass Schüttgüter einen Kegel bilden, wobei der Kegelwinkel von der Art des Schüttgutes abhängt. Durch das Dosierelement 14 wird das Schüttgut dann in Richtung zur Mittellängsachse des Fallrohres 11 gefördert und strömt dann dosiert durch die Bohrung des Austrageelementes 15 hindurch, beispielsweise in ein Gefäß, welches im landwirtschaftlichen Bereich ein Futtertrog sein kann.

Die Erfindung ist nicht auf das dargestellte Ausführungsbeispiel beschränkt. Wesentlich ist, dass in dem an den Vorratsbehälter angeschlossenen Fallrohr ein Schüttkegelbildeelement 13, ein im Abstand dazu stehendes Dosierelement 14 und ein dazu wiederum im Abstand stehendes Austrageelement 15 angeordnet sind. Ferner ist wesentlich, dass die Dosier- und Fördervorrichtung 10 ohne Schnecken oder ähnliche Bauteile voll funktionsfähig ist, so dass ein Einsatz im landwirtschaftlichen Bereich und im industriellen Bereich möglich ist.

## Patentansprüche

1. Dosier- und Fördervorrichtung (10) für fließfähiges Schüttgut, welches aus einem Vorratsbehälter austragbar ist, mit einem an den Vorratsbehälter angeschlossenen Fallrohr (11), in das ein einen Durchlaufspalt begrenzendes Schüttkegelbildeelement (13) und ein Austrageelement (15) und zwischen dem Schüttkegelbildeelement (13) und dem Austrageelement (15) ein rotierend antreibbares Dosierelement (14) jeweils im Abstand zueinander angeordnet sind, **dadurch gekennzeichnet, dass** das Austrageelement (15) als Austragering mit einer zentrischen Bohrung ausgebildet ist, und dass der Außendurchmesser des Austrageelementes (15) dem Innendurchmesser des Fallrohres (11) entspricht oder annähernd entspricht.

2. Dosier- und Fördervorrichtung nach Anspruch 1, **dadurch gekennzeichnet, dass** das Schüttkegelbildeelement (13) dem Vorratsbehälter zugewandt und dass das Austrageelement (15) dem Vorratsbehälter abgewandt liegt.

3. Dosier- und Fördervorrichtung nach Anspruch 1 oder 2, **dadurch gekennzeichnet, dass** das Schüttkegelbildeelement (13) als Einlaufscheibe ausgebildet ist, und dass der Außendurchmesser der Einlaufscheibe zur Bildung eines Durchlaufspaltes für das Schüttgut geringer ist als der Innendurchmesser des Fallrohres (11).

4. Dosier- und Fördervorrichtung nach einem oder mehreren der vorstehenden Ansprüche, **dadurch gekennzeichnet, dass** die Einlaufscheibe am äußeren Rand einen umlaufenden Kragen (19) aufweist, der in Richtung zum Austrageelement (15) gerichtet ist.

5. Dosier- und Fördervorrichtung nach einem oder mehreren der vorstehenden Ansprüche, **dadurch gekennzeichnet, dass** das Dosierelement (14) als Rührwerkzeug ausgebildet ist und mindestens einen Rührflügel (17) aufweist.

6. Dosier- und Fördervorrichtung nach einem oder mehreren der vorstehenden Ansprüche, **dadurch gekennzeichnet, dass** das Dosierelement (14) und/oder das Schüttkegelbildeelement (13) drehfest auf eine rotierend antreibbare Welle (12) aufgesetzt sind und dass das Dosierelement (14) einen auf die Welle (12) aufgesetzten Tragring (16) und mehrere daran angesetzte Rührflügel (17) aufweist, die in gleichen Winkelabständen zueinander angeordnet sind.

7. Dosier- und Fördervorrichtung nach einem oder mehreren der vorstehenden Ansprüche, **dadurch gekennzeichnet, dass** der Abstand zwischen dem Schüttkegelbildeelement (13) und dem Austrageelement (15) einstellbar ist.

8. Dosier- und Fördervorrichtung nach einem oder mehreren der vorstehenden Ansprüche, **dadurch gekennzeichnet, dass** die im Fallrohr angeordnete Welle (12) mittels einer Antriebseinheit antreibbar ist, die einen elektromotorischen Rotationsantrieb aufweist, der antriebstechnisch mit der Welle (12) gekoppelt ist.

9. Dosier- und Fördervorrichtung nach einem oder mehreren der vorstehenden Ansprüche, **dadurch gekennzeichnet, dass** die Antriebseinheit als mechanisches Getriebe ausgebildet ist, und dass das Eingangsglied des Getriebes eine manuell verdrehbare, horizontal stehende Antriebswelle ist.

## Claims

1. A dosing and conveying apparatus (10) for flowable bulk material which can be removed from a storage container, comprising a downpipe (11) in which a bulk cone forming element (13) and a discharge element (15) delimiting a passage gap are arranged and, between the bulk cone forming element (13) and the discharge element (15), a rotatably driven dosing element (14) at a distance from each other, **characterized in that** the discharge element (15) is arranged as a discharge ring with a centric borehole, and the outer diameter of the discharge element (15) corresponds to the inner diameter of the downpipe (11), or corresponds approximately thereto.

2. A dosing and conveying apparatus according to claim 1, **characterized in that** the bulk cone forming element (13) faces the storage container and the discharge element (15) faces away from the storage container.

3. A dosing and conveying apparatus according to claim 1 or 2, **characterized in that** the bulk cone forming element (13) is arranged as an inlet disc, and the outer diameter of the inlet disc is smaller than the inner diameter of the drop pipe (11) for forming a passage gap for the bulk material.

4. A dosing and conveying apparatus according to one or several of the preceding claims, **characterized in that** the inlet disc comprises a circumferential collar (19) at the outer edge, which collar faces in the direction towards the discharge element (15).

5. A dosing and conveying apparatus according to one or several of the preceding claims, **characterized in that** the dosing element (14) is arranged as a stirring tool and comprises at least one stirrer blade (17).

6. A dosing and conveying apparatus according to one or several of the preceding claims, **characterized in that** the dosing element (14) and/or the bulk cone forming element (13) is placed in a torsion-proof manner on a rotatably driveable shaft (12), and the dosing element (14) comprises a support ring (16) placed on the shaft (12) and several stirrer blades (17) which are attached thereto and are arranged at equal angular distances from each other.

7. A dosing and conveying apparatus according to one or several of the preceding claims, **characterized in that** the distance between the bulk cone forming element (13) and the discharge element (15) is adjustable.

8. A dosing and conveying apparatus according to one or several of the preceding claims, **characterized in that** the shaft (12) arranged in the downpipe is driveable by means of a drive unit having an electromotive rotary drive which is drivably coupled to the shaft (12).

9. A dosing and conveying apparatus according to one or several of the preceding claims, **characterized in that** the drive unit is arranged as a mechanical gear, and the input member of the gear is a manually twistable and horizontally standing drive shaft.

## Revendications

1. Dispositif de dosage et de transport (10) pour un matériau fluide en vrac qui peut être extrait d'un réservoir de réserve, avec un tube de descente (11) raccordé au réservoir de réserve, dans lequel sont disposés, à distance les uns des autres, un élément pour former un cône de déversement (13) délimitant une fente de passage et un élément d'extraction (15) et, entre l'élément pour former un cône de déversement (13) et l'élément d'extraction (15), un élément de dosage (14) pouvant être entraîné en rotation, **caractérisé en ce que** l'élément d'extraction (15) est conformé comme un anneau d'extraction avec un perçage central et **en ce que** le diamètre extérieur de l'élément d'extraction (15) correspond au diamètre intérieur du tube de descente (11) ou s'en approche.

2. Dispositif de dosage et de transport selon la revendication 1, **caractérisé en ce que** l'élément pour former un cône de déversement (13) est tourné face au réservoir de réserve et **en ce que** l'élément d'extraction (15) est tourné à l'opposé du réservoir de réserve.

3. Dispositif de dosage et de transport selon la revendication 1 ou 2, **caractérisé en ce que** l'élément pour former un cône de déversement (13) est conformé comme un disque d'entrée et **en ce que** le diamètre extérieur du disque d'entrée pour former la fente de passage de la matière en vrac est plus petit que le diamètre intérieur du tube de descente (11).

4. Dispositif de dosage et de transport selon une ou plusieurs des revendications précédentes, **caractérisé en ce que** le disque d'entrée présente sur le bord extérieur un collet (19) continu qui est orienté en direction de l'élément d'extraction (15).

5. Dispositif de dosage et de transport selon une ou plusieurs des revendications précédentes, **caractérisé en ce que** l'élément de dosage (14) est conçu comme un outil agitateur et présente au moins une pale d'agitateur (17).

6. Dispositif de dosage et de transport selon une ou plusieurs des revendications précédentes, **caractérisé en ce que** l'élément de dosage (14) et/ou l'élément pour former un cône de déversement (13) sont posés de façon solidaire en rotation sur un arbre (12) pouvant être entraîné en rotation et **en ce que** l'élément de dosage (14) comporte un anneau de support (16) posé sur l'arbre (12) et plusieurs pales d'agitateur (17) appuyées sur celui-ci, qui sont disposées à distance angulaire égale les unes des autres.

7. Dispositif de dosage et de transport selon une ou plusieurs des revendications précédentes, **caractérisé en ce que** la distance entre l'élément pour former un cône de déversement (13) et l'élément d'extraction (15) est réglable.

8. Dispositif de dosage et de transport selon une ou plusieurs des revendications précédentes, **caractérisé en ce que** l'arbre (12) disposé dans le tube de descente peut être entraîné au moyen d'une unité d'entraînement qui présente un entraînement en rotation à moteur électrique couplé en vue de l'entraînement avec l'arbre (12).

9. Dispositif de dosage et de transport selon une ou plusieurs des revendications précédentes, **caractérisé en ce que** l'unité d'entraînement est conçue comme un engrenage mécanique et **en ce que** l'organe d'entrée de l'engrenage est un arbre d'entraînement horizontal qui peut être tourné à la main.
